# EUROPÄISCHE PATENTSCHRIFT

(11) **EP 3 716 238 B1**
(45) Veröffentlichungstag und Bekanntmachung des Hinweises auf die Patenterteilung: **15.03.2023**
(21) Anmeldenummer: 19165515.8
(22) Anmeldetag: 27.03.2019
(51) Int. Cl.: G08B 7/06, G06N 3/08

(54) **VERFAHREN ZUM ERMITTELN EINER EVAKUIERUNGSSTRATEGIE FÜR EINE EVAKUIERUNG EINES GEBÄUDES**
METHOD FOR DETERMINING AN EVACUATION STRATEGY FOR EVACUATION OF A BUILDING
PROCÉDÉ DE DÉTERMINATION D'UNE STRATÉGIE D'ÉVACUATION POUR L'ÉVACUATION D'UN BÂTIMENT

(43) Veröffentlichungstag der Anmeldung: 30.09.2020
(73) Patentinhaber: Siemens Aktiengesellschaft, 80333 München (DE)
(72) Erfinder: Klein, Wolfram, 85579 Neubiberg (DE); Lorenzi, Juan Manuel, 80801 München (DE); Papadopoulos, Theodoros, 80333 München (DE); Zhou, Yayun, 81739 München (DE); Zietsch, Jakob, 80809 München (DE)
(74) Vertreter: Siemens Patent Attorneys

(56) Entgegenhaltungen:
- WO-A1-96/39687
- WO-A1-98/17350
- WO-A1-2014/097019
- WO-A2-00/03355
- DE-A1-102008 042 391
- US-A1- 2017 124 842

## Beschreibung

Die Erfindung betrifft ein Verfahren zum Ermitteln einer Evakuierungsstrategie für eine Evakuierung eines Gebäudes vermöge eines Trainings eines künstlichen neuronalen Netzes. Die Erfindung betrifft weiter eine Vorrichtung, ein Computerprogramm und ein maschinenlesbares Speichermedium.

In Produktionsstätten kann es durch Feuer, Rauch oder Gefahrenstoffe ungewollt zu bedrohlichen Situationen für Mitarbeiter und Belegschaft kommen. Sollte eine solche Gefahrensituation eintreten, ist eine schnelle, zielgerichtete und insbesondere situationsbezogene Evakuierung der Mitarbeiter notwendig.

Bisherige Evakuierungsszenarien sind üblicherweise statisch vorgegeben, was sicherstellen soll, dass die Evakuierung direkt eingeleitet werden kann.

Diese Szenarien wurden zum Beispiel mithilfe einer Personensimulation evaluiert und deren Effektivität verifiziert.

Evakuierungsstrategien in Produktionsstätten, welche insbesondere mit Gefahrenstoffen arbeiten, werden beispielsweise mithilfe von Experten entwickelt und über Evakuierungssimulationen verifiziert.

Evakuierungssimulationen besitzen beispielsweise die Option, eine Gefahrenstelle zu platzieren und das Verhalten der Personen im Gebäude entsprechend zu simulieren.

Die Offenlegungsschrift WO 98/17350 A offenbart ein Evakuierungssystem.

Die Offenlegungsschrift WO 96/39687 A1 offenbart ein Verfahren zum Leiten von Personen.

Die Offenlegungsschrift DE 10 2008 042 391 A1 offenbart eine Brandsicherungsvorrichtung.

Die Offenlegungsschrift WO 2014/097019 A1 offenbart eine Vorrichtung zum Bereitstellen einer Evakuierungsroute.

Die der Erfindung zugrundeliegende Aufgabe ist darin zu sehen, eine effiziente Evakuierung eines Gebäudes zu ermöglichen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Erfindungsgemäß wird ein Verfahren zum Ermitteln einer Evakuierungsstrategie für eine Evakuierung eines Gebäudes bereitgestellt, umfassend die folgenden Schritte:
Empfangen von Trainingssignalen, welche Trainingsdaten zum Trainieren eines künstlichen neuronalen Netzes repräsentieren, wobei die Trainingsdaten Topologiedaten, welche eine Topologie eines Gebäudes angeben, und Ereignisdaten umfassen, welche ein eine Evakuierung des Gebäudes erforderndes Ereignis angeben,
Simulieren eines zeitlichen Verlaufs des Ereignisses basierend auf der Topologie des Gebäudes,
Simulieren eines zeitlichen Verhaltens von Personen innerhalb des Gebäudes,
Ermitteln einer Sollevakuierungsstrategie für eine Evakuierung des Gebäudes basierend auf der Simulation des zeitlichen Verlaufs des Ereignisses, sowie auf der Simulation des zeitlichen Verhaltens der Personen,
Trainieren des künstlichen neuronalen Netzes basierend auf den Trainingsdaten derart, dass das künstliche neuronale Netz basierend auf den Trainingsdaten eine Evakuierungsstrategie für eine Evakuierung des Gebäudes ermittelt, welche der ermittelten Sollevakuierungsstrategie entspricht oder welche maximal um ein vorbestimmtes Toleranzmaß von der ermittelten Sollevakuierungsstrategie abweicht.
Empfangen von Sensorsignalen, welche ein mittels eines vom Gebäude umfassten Sensors erfasstes, eine Evakuierung des Gebäudes erforderndes Ereignis repräsentieren,
Ermitteln einer Evakuierungsstrategie für eine Evakuierung aus dem Gebäude mittels eines künstlichen neuronalen Netzes basierend auf dem erfassten Ereignis, und Ausgeben von Evakuierungsstrategiesignalen, welche die ermittelte Evakuierungsstrategie repräsentieren.

Erfindungsgemäß wird auch eine Vorrichtung bereitgestellt, die eingerichtet ist, alle Schritte des erfindungsgemässen Verfahrens auszuführen.

Erfindungsgemäß wird auch ein Computerprogramm bereitgestellt, welches Befehle umfasst, die bei Ausführung des Computerprogramms durch einen Computer, beispielsweise durch die erfindungsgemässe Vorrichtung diesen veranlassen, ein erfindungsgemässes Verfahren auszuführen.

Erfindungsgemäß wird auch ein maschinenlesbares Speichermedium bereitgestellt, auf dem das erfindungsgemässe Computerprogramm gespeichert ist.

Die Erfindung basiert auf der Erkenntnis und schließt diese mit ein, dass die obige Aufgabe dadurch gelöst werden kann, dass zum Ermitteln einer Evakuierungsstrategie für eine Evakuierung eines Gebäudes ein künstliches neuronales Netz verwendet wird. Dieses verwendet die Sensorsignale, welche ein mittels eines vom Gebäude umfassten Sensors erfasstes, eine Evakuierung des Gebäudes erforderndes Ereignis repräsentieren, um die Evakuierungsstrategie zu ermitteln.

Somit wird insbesondere der technische Vorteil bewirkt, dass die Evakuierungsstrategie effizient ermittelt werden kann. Insofern kann ein Gebäude effizient evakuiert werden.

Ein Ereignis im Sinne der Beschreibung kann beispielsweise eines der folgenden Ereignisse sein: Brand, Rauch, Gaswolke, Gasaustritt, Explosion, Wasseraustritt und Wasseransammlung.

Ein Sensor im Sinne der Beschreibung kann beispielsweise einer der folgenden Sensoren sein: Temperatursensor, Gassensor, Videosensor, Drucksensor, Widerstandssensor, Biosensor, Radarsensor, Lidarsensor, Abstandssensor, Ultraschallsensor und Schallsensor.

Ein Sensor im Sinne der Beschreibung ist insbesondere eingerichtet, ein eine Evakuierung des Gebäudes erforderndes Ereignis zu erfassen oder zu detektieren.

Wenn für den Sensor der Singular verwendet wird, soll stets der Plural und umgekehrt mitgelesen werden.

Nach einer Ausführungsform ist vorgesehen, dass die Sensorsignale zusätzlich eine Sensorposition des Sensors im Gebäude repräsentieren.

Dadurch wird zum Beispiel der technische Vorteil bewirkt, dass ein Ort des Ereignisses effizient bestimmt werden kann.

Nach einer Ausführungsform ist vorgesehen, dass die Evakuierungsstrategie basierend auf der Sensorposition ermittelt wird.

Gemäß einer Ausführungsform ist vorgesehen, dass Wettersignale empfangen werden, welche Wetterdaten repräsentieren, welche ein Wetter in einer Umgebung des Gebäudes definieren, wobei die Evakuierungsstrategie basierend auf dem Wetter in der Umgebung des Gebäudes ermittelt wird.

Dadurch wird zum Beispiel der technische Vorteil bewirkt, dass die Evakuierungsstrategie effizient ermittelt werden kann.

Gemäß dieser Ausführungsform können somit in vorteilhafter Weise Umwelteinflüsse auf ein Ausbreitungsverhalten des Ereignisses effizient berücksichtigt werden.

So kann zum Beispiel ein Ausbreitungsverhalten eines Feuers oder einer Gaswolke unter anderem von einer Windrichtung abhängen.

Ein Wetter, wie vorstehend und/oder nachstehend verwendet, umfasst zum Beispiel ein aktuelles Wetter und/oder ein zukünftiges prognostiziertes Wetter.

Ein Wetter wird zum Beispiel durch eine Temperatur, eine Windrichtung, eine Windstärke, eine Luftfeuchtigkeit und/oder einen Luftdruck definiert.

Nach einer Ausführungsform ist vorgesehen, dass Personenbelegungssignale empfangen werden, welche Personenbelegungsdaten repräsentieren, welche eine Personenbelegung des Gebäudes angeben, wobei die Evakuierungsstrategie basierend auf der Personenbelegung des Gebäudes ermittelt wird.

Dadurch wird zum Beispiel der technische Vorteil bewirkt, dass die Evakuierungsstrategie effizient ermittelt werden kann.

So ist zum Beispiel vorgesehen, ab einer bestimmten Personenanzahl innerhalb des Gebäudes mehrere Fluchtwege für die Evakuierungsstrategie vorzusehen.

Eine Personenbelegung, wie vorstehend und/oder nachstehend verwendet, umfasst zum Beispiel eine aktuelle Personenbelegung und/oder eine zukünftige Personenbelegung.

Gemäß einer Ausführungsform ist vorgesehen, dass Positionssignale empfangen werden, welche Positionsdaten repräsentieren, welche eine Position einer Person in dem Gebäude angeben, wobei die Evakuierungsstrategie basierend auf der Position der Person in dem Gebäude ermittelt wird.

Dadurch wird zum Beispiel der technische Vorteil bewirkt, dass die Evakuierungsstrategie effizient ermittelt werden kann. Insbesondere wird dadurch der technische Vorteil bewirkt, dass eine für die Person angepasste Evakuierungsstrategie unter Berücksichtigung ihrer Position effizient ermittelt werden kann.

Gemäß einer Ausführungsform ist vorgesehen, dass Maschinenzustandssignale empfangen werden, welche Maschinenzustandsdaten repräsentieren, welche einen Zustand einer vom Gebäude umfassten Maschine angeben, wobei die Evakuierungsstrategie basierend auf dem Zustand der Maschine ermittelt wird.

Dadurch wird zum Beispiel der technische Vorteil bewirkt, dass die Evakuierungsstrategie effizient ermittelt werden kann.

Gemäß dieser Ausführungsform ist also vorgesehen, dass ein Zustand der Maschine beim Ermitteln der Evakuierungsstrategie berücksichtigt wird. So kann es zum Beispiel eine Rolle spielen, ob eine Maschine im Betrieb oder nicht im Betrieb ist bei der Frage nach einem sinnvollen Fluchtweg.

Ein Zustand der Maschine ist beispielsweise ein eingeschalteter Zustand, ein ausgeschalteter Zustand oder ein Stand-by-Zustand.

Ein Zustand, wie vorstehend und/oder nachstehend verwendet, umfasst zum Beispiel einen aktuellen Zustand und/oder einen zukünftigen Zustand.

Nach einer Ausführungsform ist vorgesehen, dass basierend auf der ermittelten Evakuierungsstrategie Informationssteuersignale zum Steuern einer Informationsanlage des Gebäudes zum Informieren über die ermittelte Evakuierungsstrategie erzeugt und ausgegeben werden.

Dadurch wird zum Beispiel der technische Vorteil bewirkt, dass die Informationsanlage effizient gesteuert werden kann.

Eine Informationsanlage des Gebäudes kann zum Beispiel eines oder mehrere der folgenden Elemente umfassen: Bildschirm (zum Beispiel ein Bildschirm eines Arbeitsplatzrechners) zum visuellen Anzeigen der Evakuierungsstrategie, Lautsprecher zum Ausgeben eines Audiohinweises auf die Evakuierungsstrategie, Leuchteinrichtungen zum visuellen Anzeigen eines der Evakuierungsstrategie entsprechenden Fluchtweges.

Eine Leuchteinrichtung umfasst beispielsweise eines oder mehrere Leuchtelemente, die beispielsweise an einem Boden, an einer Decke oder an einer Wand des Gebäudes angeordnet sind.

Ein Leuchtelement ist beispielsweise eine Leuchtdiode.

Nach einer Ausführungsform ist vorgesehen, dass basierend auf der ermittelten Evakuierungsstrategie Steuersignale zum Steuern einer Ereignisschutzanlage des Gebäudes erzeugt und ausgegeben werden.

Dadurch wird zum Beispiel der technische Vorteil bewirkt, dass die Ereignisschutzanlage effizient gesteuert werden kann.

Eine Ereignisschutzanlage im Sinne der Beschreibung kann beispielsweise eine der folgenden Ereignisschutzanlagen sein: Brandschutzanlage, Wasserschutzanlage, Gasschutzanlage und Feuerschutzanlage.

Nach einer Ausführungsform ist vorgesehen, dass die Trainingsdaten Wetterdaten umfassen, welche ein (zum Beispiel simuliertes) Wetter in einer Umgebung des Gebäudes definieren, wobei der zeitliche Verlauf des Ereignisses basierend auf dem Wetter in der Umgebung des Gebäudes simuliert wird.

Dadurch wird zum Beispiel der technische Vorteil bewirkt, dass für das Trainieren des künstlichen neuronalen Netzes ein Wetter in einer Umgebung des Gebäudes berücksichtigt werden kann.

Gemäß einer Ausführungsform ist vorgesehen, dass die Trainingsdaten Personenbelegungsdaten umfassen, welche eine (zum Beispiel simulierte) Personenbelegung des Gebäudes angeben, wobei die Sollevakuierungsstrategie basierend auf der Personenbelegung des Gebäudes ermittelt wird.

Dadurch wird zum Beispiel der technische Vorteil bewirkt, dass für das Trainieren des künstlichen neuronalen Netzes eine Personenbelegung des Gebäudes effizient berücksichtigt werden kann.

Gemäß einer Ausführungsform ist vorgesehen, dass die Trainingsdaten Positionsdaten umfassen, welche eine (zum Beispiel simulierte) Position einer Person in dem Gebäude angeben, wobei die Sollevakuierungsstrategie basierend auf der Position der Person in dem Gebäude ermittelt wird.

Dadurch wird zum Beispiel der technische Vorteil bewirkt, dass eine Position einer Person in dem Gebäude effizient für das Trainieren des künstlichen neuronalen Netzes verwendet werden kann.

Gemäß einer Ausführungsform ist vorgesehen, dass die Positionsdaten jeweils eine (zum Beispiel simulierte) Position von den der Personenbelegung entsprechenden Personen angeben, wobei basierend auf dem simulierten Verlauf des Ereignisses das zeitliche Verhalten der Personen simuliert wird.

Dadurch wird zum Beispiel der technische Vorteil bewirkt, dass ein zeitliches Verhalten der Personen für das Trainieren des künstlichen neuronalen Netzes effizient berücksichtigt werden kann.

Gemäß dieser Ausführungsform findet also eine Kopplung einer Simulation des Verlaufs des Ereignisses und einer Simulation des zeitlichen Verhaltens der Personen in effizienter Weise statt.

Gemäß einer Ausführungsform ist vorgesehen, dass die Trainingsdaten Maschinenzustandsdaten umfassen, welche einen (zum Beispiel simulierten) Zustand einer vom Gebäude umfassten Maschine angeben, wobei die Sollevakuierungsstrategie basierend auf dem Zustand der Maschine ermittelt wird.

Dadurch wird zum Beispiel der technische Vorteil bewirkt, dass für das Trainieren des künstlichen neuronalen Netzes ein Maschinenzustand beziehungsweise ein Zustand der Maschine effizient berücksichtigt werden kann.

Daten, welche für das Trainieren des künstlichen neuronalen Netzes verwendet werden, umfassen zum Beispiel reale Daten und/oder simulierte Daten.

Es ist vorgesehen, dass das erfindungsgemässe Verfahren mittels der erfindungsgemässen Vorrichtung aus- oder durchgeführt wird.

Vorrichtungsmerkmale ergeben sich analog aus entsprechenden Verfahrensmerkmalen und umgekehrt.

Nach einer Ausführungsform ist das erfindungsgemässe Verfahren ein computerimplementiertes Verfahren.

Nach einer Ausführungsform ist das Gebäude von einer Fabrikanlage umfasst.

Das Gebäude ist zum Beispiel ein Fabrikgebäude.

Nach einer Ausführungsform definiert die Topologie des Gebäudes ein Layout des Gebäudes.

Eine Topologie des Gebäudes gibt zum Beispiel an, ob, und wenn ja, wo sich Gefahrenstoffe innerhalb des Gebäudes befinden.

Eine Topologie des Gebäudes gibt zum Beispiel an, um was für eine Art von Gefahrenstoff es sich handelt.

Ein Gefahrenstoff ist zum Beispiel Chlorgas oder Methan.

Wetterdaten umfassen zum Beispiel Winddaten, insbesondere Windgeschwindigkeitsdaten, welche eine Windgeschwindigkeit angeben, Windrichtungsdaten, welche eine Windrichtung angeben, Luftfeuchtigkeitsdaten, welche eine Luftfeuchtigkeit angeben, Temperaturdaten, welche eine Temperatur angeben, und/oder Luftdruckdaten, welche einen Luftdruck angeben.

Das heißt also insbesondere, dass das Wetter zum Beispiel durch Folgendes definiert ist: Windgeschwindigkeit und/oder Windrichtung und/oder Luftfeuchtigkeit und/oder Temperatur und/oder Luftdruck.

Eine Topologie gibt beispielsweise an, wo sich innerhalb des Gebäudes die Maschine befindet. Das heißt also, dass die Topologie eine Position einer Maschine innerhalb des Gebäudes angibt.

Eine Topologie gibt beispielsweise an, ob, und wenn ja, wo innerhalb des Gebäudes eine Renovierungsarbeit durchgeführt wird.

Sensorsignale geben beispielsweise zusätzlich ein Datum an, wann der Sensor das Ereignis erfasst oder detektiert hat. Ein Datum umfasst zum Beispiel eine Uhrzeit und/oder einen Tag und/oder einen Monat und/oder ein Jahr.

Eine Evakuierungsstrategie kann beispielsweise eines oder mehrere der folgenden Elemente umfassen: Verlauf eines Fluchtwegs oder Verläufe mehrerer Fluchtwege, ein oder mehrere Sammelpunkte für zu evakuierende Personen.

Nach einer Ausführungsform ist die ermittelte Evakuierungsstrategie eine personenspezifische Evakuierungsstrategie. Das heißt also insbesondere, dass für eine bestimmte Person eine spezifische Evakuierungsstrategie ermittelt wird. Hierbei wird zum Beispiel die Position der Person innerhalb des Gebäudes berücksichtigt.

Gemäß einer Ausführungsform ist vorgesehen, dass die Evakuierungsstrategie eine dynamische Evakuierungsstrategie ist. Eine solch dynamische Evakuierungsstrategie wird zum Beispiel im Laufe der Zeit angepasst. Das heißt also insbesondere, dass bei einem solchen Anpassen ein aktueller Verlauf des Ereignisses berücksichtigt wird. Bei einem solchen Anpassen wird zum Beispiel eine aktuelle Position der Person in dem Gebäude berücksichtigt.

Bei einem solchen Anpassen wird zum Beispiel das Verhalten von weiteren Personen innerhalb des Gebäudes berücksichtigt. So ist zum Beispiel bei einem solchen Anpassen vorgesehen, dass bei einer personenspezifischen Evakuierungsstrategie eine ursprünglich gewählte Fluchttür durch eine andere ersetzt wird, wenn zum Beispiel weitere Personen aufgrund ihres aktuellen Verhaltens die ursprünglich gewählte Fluchttür blockieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines Verfahrens zum Ermitteln einer Evakuierungsstrategie für eine Evakuierung eines Gebäudes,
- FIG 2: ein Ablaufdiagramm eines Verfahrens zum Trainieren eines künstlichen neuronalen Netzes,
- FIG 3: ein Ablaufdiagramm eines weiteren Verfahrens zum Trainieren eines künstlichen neuronalen Netzes,
- FIG 4: eine Vorrichtung,
- FIG 5: ein künstliches neuronales Netz,
- FIG 6: ein maschinenlesbares Speichermedium und
- FIG 7: ein Blockdiagramm, welches beispielhaft das hier beschriebene Konzept darstellt,
zeigen.

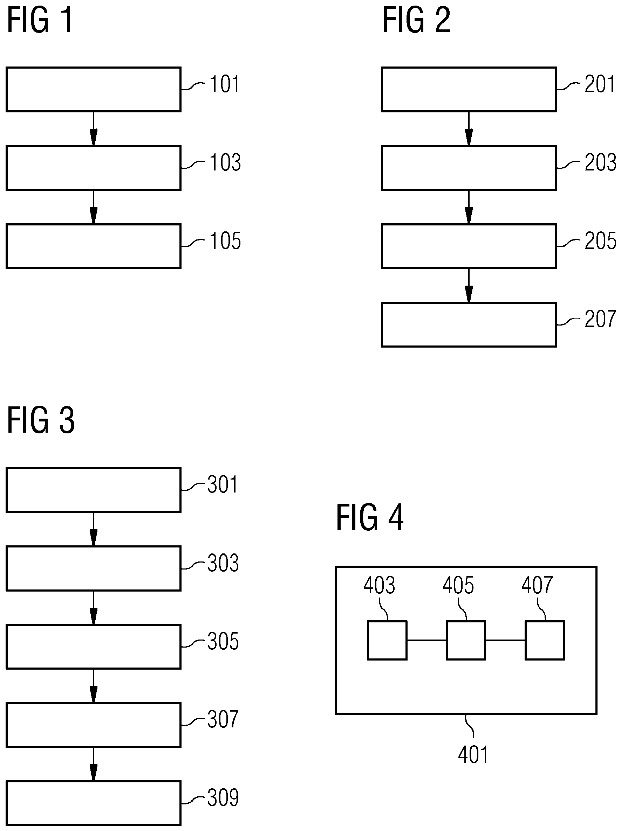

FIG 1 zeigt ein Ablaufdiagramm eines Verfahrens zum Ermitteln einer Evakuierungsstrategie für eine Evakuierung eines Gebäudes.

Das Verfahren umfasst die folgenden Schritte:
Empfangen 101 von Sensorsignalen, welche ein mittels eines vom Gebäude umfassten Sensors erfasstes, eine Evakuierung des Gebäudes erforderndes Ereignis repräsentieren,
Ermitteln 103 einer Evakuierungsstrategie für eine Evakuierung aus dem Gebäude mittels eines künstlichen neuronalen Netzes basierend auf dem erfassten Ereignis,
Ausgeben 105 von Evakuierungsstrategiesignalen, welche die ermittelte Evakuierungsstrategie repräsentieren.

FIG 2 zeigt ein Ablaufdiagramm eines Verfahrens zum Trainieren eines künstlichen neuronalen Netzes.

Das Verfahren umfasst die folgenden Schritte:
Empfangen 201 von Trainingssignalen, welche Trainingsdaten zum Trainieren des künstlichen neuronalen Netzes repräsentieren, wobei die Trainingsdaten Topologiedaten, welche eine Topologie eines Gebäudes angeben, und Ereignisdaten umfassen, welche ein eine Evakuierung des Gebäudes erforderndes Ereignis angeben,
Simulieren 203 eines zeitlichen Verlaufs des Ereignisses basierend auf der Topologie des Gebäudes,
Ermitteln 205 einer Sollevakuierungsstrategie für eine Evakuierung des Gebäudes basierend auf der Simulation des zeitlichen Verlaufs des Ereignisses,
Trainieren 207 des künstlichen neuronalen Netzes basierend auf den Trainingsdaten derart, dass das künstliche neuronale Netz basierend auf den Trainingsdaten eine Evakuierungsstrategie für eine Evakuierung des Gebäudes ermittelt, welche der ermittelten Sollevakuierungsstrategie entspricht oder welche maximal um ein vorbestimmtes Toleranzmaß von der ermittelten Sollevakuierungsstrategie abweicht.

FIG 3 zeigt ein Ablaufdiagramm eines Verfahrens zum Trainieren des künstlichen neuronalen Netzes, das Bestandteil des erfindungsgemässen Verfahrens ist.

Das Verfahren umfasst ein Empfangen 301 von Trainingssignalen, welche Trainingsdaten zum Trainieren des künstlichen neuronalen Netzes repräsentieren, wobei die Trainingsdaten Topologiedaten, welche eine Topologie eines Gebäudes angeben, und Ereignisdaten umfassen, welche ein eine Evakuierung des Gebäudes erforderndes Ereignis angeben.

Das Verfahren umfasst ein Simulieren 303 eines zeitlichen Verlaufs des Ereignisses basierend auf der Topologie des Gebäudes.

Es ist vorgesehen, dass die Trainingsdaten Personenbelegungsdaten umfassen, welche eine Personenbelegung des Gebäudes angeben, wobei die Sollevakuierungsstrategie basierend auf der Personenbelegung des Gebäudes ermittelt wird.

Es ist weiter vorgesehen, dass die Trainingsdaten Positionsdaten umfassen, welche eine Position einer Person in dem Gebäude angeben, wobei die Sollevakuierungsstrategie basierend auf der Position der Person in dem Gebäude ermittelt wird.

Es ist vorgesehen, dass die Positionsdaten jeweils eine Position von den der Personenbelegung entsprechenden Personen angeben.

Gemäß einem Schritt 305 wird basierend auf dem simulierten Verlauf des Ereignisses ein zeitliches Verhalten der Personen simuliert.

Gemäß einem Schritt 307 wird eine Sollevakuierungsstrategie für eine Evakuierung des Gebäudes basierend auf der Simulation des zeitlichen Verlaufs des Ereignisses und basierend auf dem simulierten zeitlichen Verhalten der Personen ermittelt. Gemäß einem Schritt 309 ist ein Trainieren des künstlichen neuronalen Netzes basierend auf den Trainingsdaten derart vorgesehen, dass das künstliche neuronale Netz basierend auf den Trainingsdaten eine Evakuierungsstrategie für eine Evakuierung des Gebäudes ermittelt, welche der ermittelten Sollevakuierungsstrategie entspricht oder welche maximal um ein vorbestimmtes Toleranzmaß von der ermittelten Sollevakuierungsstrategie abweicht.

FIG 4 zeigt eine Vorrichtung 401, welche eingerichtet ist, alle Schritte des erfindungsgemässen Verfahrens auszuführen.

Die Vorrichtung 401 umfasst einen Eingang 403, welcher eingerichtet ist, die in dem Verfahren vorgesehenen Signale zu empfangen.

Die Vorrichtung 401 umfasst weiter einen Prozessor 405, welcher eingerichtet ist, dem Verfahren entsprechende Schritte des Ermittelns, des Simulierens, des Erzeugens und des Trainierens aus- oder durchzuführen.

Die Vorrichtung 401 umfasst weiter einen Ausgang 407, welcher eingerichtet ist, die dem Verfahren entsprechenden Schritte des Ausgebens aus- oder durchzuführen.

In einer Ausführungsform ist vorgesehen, dass anstelle des einen Prozessors 405 mehrere Prozessoren vorgesehen sind.

Die Vorrichtung 401 kann zum Beispiel Teil einer Cloud-Infrastruktur sein.

Die Vorrichtung 401 ist zum Beispiel ein Computer.

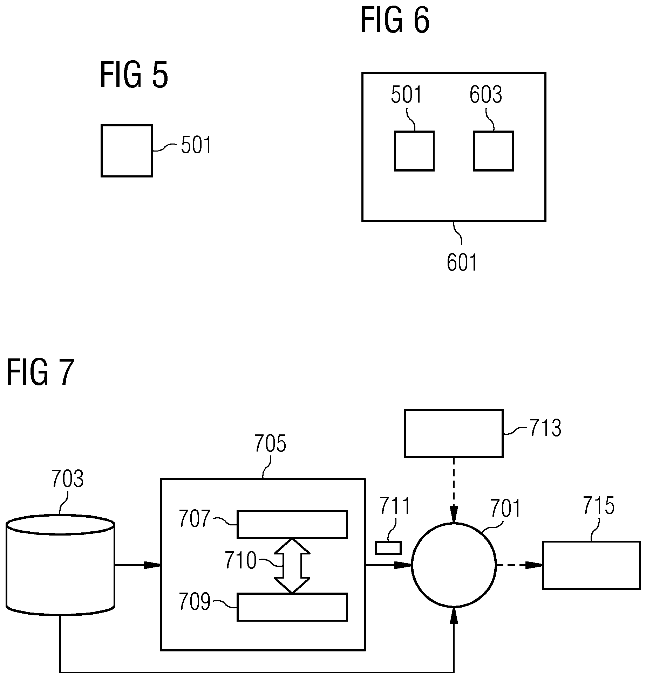

FIG 5 zeigt ein künstliches neuronales Netz 501.

Das künstliche neuronale Netz 501 ist mittels des erfindungsgemässen Verfahrens trainiert.

FIG 6 zeigt ein maschinenlesbares Speichermedium 601, auf dem das künstliche neuronale Netz 501 gemäß FIG 5 gespeichert ist.

Weiter ist auf dem maschinenlesbaren Speichermedium 601 ein Computerprogramm 603 gespeichert. Das Computerprogramm 603 umfasst Befehle, die bei Ausführung des Computerprogramms durch einen Computer, beispielsweise durch die Vorrichtung 401 gemäß FIG 4, diesen veranlassen, ein erfindungsgemässes Verfahren auszuführen.

FIG 7 zeigt ein Blockdiagramm, welches eine beispielhafte Ausgestaltung des hier beschriebenen Konzepts schematisch erläutert.

Gestrichelt dargestellte Pfeile bedeuten, dass sich die entsprechenden Schritte auf das erfindungsgemässe Verfahren beziehen.

Durchzogen dargestellte Pfeile bedeuten, dass sich die entsprechenden Schritte auf das erfindungsgemässe Verfahren beziehen.

Das hier beschriebene Konzept basiert auf der Verwendung eines künstlichen neuronalen Netzes 701. Das künstliche neuronale Netz 701 wird unter Verwendung von Trainingsdaten 703 trainiert.

Die Trainingsdaten 703 umfassen Topologiedaten, welche eine Topologie eines Gebäudes angeben.

Die Trainingsdaten umfassen weiter Ereignisdaten, welche ein eine Evakuierung des Gebäudes erforderndes Ereignis angeben.

Weiter umfassen die Trainingsdaten 703 zum Beispiel Personenbelegungsdaten, Wetterdaten und/oder Sensorpositionsdaten, wie vorstehend bereits erläutert.

Weiter umfassen die Trainingsdaten zum Beispiel Angaben darüber, wo sich innerhalb des Gebäudes ein Gefahrenstoff befindet. Weiter umfassen die Trainingsdaten zum Beispiel eine Angabe, um was für eine Art von Gefahrenstoff es sich handelt.

Das heißt also, dass die Trainingsdaten Gefahrenstoffpositionsdaten umfassen können, welche eine Position von einem Gefahrenstoff oder Positionen von Gefahrenstoffen bezogen auf das Gebäude angeben.

Weiter können die Trainingsdaten Gefahrenstoffartdaten umfassen, welche angeben, um was für eine Art von Gefahrenstoff es sich handelt.

Weiter können die Trainingsdaten Informationen über eine Informationsanlage des Gebäudes umfassen.

Weiter können die Trainingsdaten Informationen über eine Ereignisschutzanlage des Gebäudes umfassen.

Weiter können die Trainingsdaten bereits ermittelte Evakuierungsstrategien enthalten.

Die Trainingsdaten 703 werden weiter einem Co-Simulationsframework 705 bereitgestellt.

Das Co-Simulationsframework 705 führt zum einen eine Personensimulation 707 durch und führt zum anderen eine physikalische Simulation 709 eines zeitlichen Verlaufs des Ereignisses durch.

Hierbei ist vorgesehen, dass die Personensimulation 707 mit der physikalischen Simulation 709 gekoppelt wird, was symbolisch durch einen Doppelpfeil mit dem Bezugszeichen 710 dargestellt ist.

Das Koppeln bedeutet insbesondere, dass bei dem Simulieren eines zeitlichen Verhaltens der Personen innerhalb des Gebäudes ein zeitliches Verhalten des Ereignisses berücksichtigt wird.

Die physikalische Simulation 709 wird zum Beispiel basierend auf dem Prinzip der numerischen Strömungsmechanik (englisch: computational fluid dynamics (CFD)) durchgeführt.

Das Co-Simulationsframework 705 ermittelt basierend auf der Personensimulation 707 und basierend auf der physikalischen Simulation 709 eine Sollevakuierungsstrategie 711 für eine Evakuierung des Gebäudes.

Bei der Sollevakuierungsstrategie 711 handelt es sich also um die bestmögliche Evakuierungsstrategie des Gebäudes, welche basierend auf der Personensimulation 707 und basierend auf der physikalischen Simulation 709 ermittelt wurde.

Das künstliche neuronale Netz 701 wird weiter basierend auf der Sollevakuierungsstrategie 711 trainiert.

Das heißt also, dass das künstliche neuronale Netz 701 so lange mit den Trainingsdaten 703 trainiert wird, bis das künstliche neuronale Netz 701 entweder die Sollevakuierungsstrategie 711 ermittelt oder eine Evakuierungsstrategie ermittelt, welche maximal um ein vorbestimmtes Toleranzmaß von der Sollevakuierungsstrategie 711 abweicht.

Es kann weiter vorgesehen sein, dass dieses Trainieren mehrmals durchgeführt wird, wobei jedes Mal die Trainingsdaten zumindest teilweise unterschiedlich sein können.

Das heißt also insbesondere, dass eine Vielzahl von möglichen Situationen für das Training des künstlichen neuronalen Netzes 701 verwendet wird, um das künstliche neuronale Netz 701 effizient zu trainieren.

Im Betrieb des Gebäudes, ist dann zum Beispiel in einem Ereignisfall vorgesehen, dass das so trainierte künstliche neuronale Netz 701 Sensorsignale 713 empfängt, welche ein mittels eines vom Gebäude umfassten Sensors erfasstes, eine Evakuierung des Gebäudes erforderndes Ereignis repräsentieren.

Das entsprechend trainierte künstliche neuronale Netz 701 ermittelt basierend auf dem erfassten Ereignis eine Evakuierungsstrategie 715.

Als weiteren Input beziehungsweise weitere Eingangsdaten in einem Ereignisfall kann das künstliche neuronale Netz 701 noch zusätzlich ein oder mehrere der folgenden Daten erhalten, um basierend auf diesen Daten eine Evakuierungsstrategie 715, insbesondere eine dynamische Evakuierungsstrategie, zu ermitteln: Wetterdaten, Personenbelegungsdaten, Positionsdaten, welche eine Position einer Person in dem Gebäude angeben, Maschinenzustandsdaten (wie vorstehend bereits definiert) .

Zusammenfassend basiert das hier beschriebene Konzept unter anderem darauf, dass über ein Co-Simulationsframework Evakuierungssimulationen und detaillierte physikalische Simulationen bezüglich der Ausbreitung von Gefahrenstoffen kombiniert werden. Als Input werden (zum Beispiel simulierte) Umweltdaten (z.B. Windgeschwindigkeiten, Windrichtung, Luftdruck, Temperatur oder Luftfeuchtigkeit), die Topologie des Gebäudes (z.B. das Layout des Gebäudes oder Leitungen, welche Gefahrenstoffe enthalten), die Arten der Gefahrenstoffe/quellen (z.B. Chlorgas, Methan) und die Platzierung der unterschiedlichen Sensoren verwendet. Hierbei wird insbesondere nicht nur ein Input-Szenario simuliert, sondern möglichst viele, vorzugsweise möglichst wahrscheinliche, Input-Szenarien simuliert mit zum Beispiel variierenden Orten einer beispielhaften potentiellen Explosion in dem Gebäude, beispielsweis einem Fabrikgebäude, mit einem Feuer, mit zum Beispiel vielen/wenigen Personen, mit zum Beispiel variierenden Windrichtungen, die beispielsweise vorab über eine technische Risiko-Analyse geschätzt werden.

Das Ergebnis der Simulationen wie auch schon von anderen Erfahrungen dieses Gebäudes, zum Beispiel dieses Fabrikgebäudes, mit Evakuierungsszenarien bildet eine große Datenbasis für das Training einer künstlichen Intelligenz, das künstliche neuronale Netz, welche im Gefahrenfall die optimale Evakuierungsstrategie in möglichst kurzer Zeit auswählt, indem sie als zum Beispiel einzigen Input die Livedaten der anschlagenden Sensoren, die Personenbelegung und aktuelle Wetterdaten zur Verfügung gestellt bekommt.

Durch die Kombination einer Personensimulation mit einer detaillierten physikalischen Simulation der dynamischen Ausbreitung von Gefahrenstoffen/quellen aufgrund von Umweltbedingungen als Datenbasis bzw. Trainingsgrundlage für eine künstliche Intelligenz können Evakuierungsstrategien bestmöglich optimiert werden. Die trainierte künstliche Intelligenz kann in vorteilhafter Weise gewährleisten, dass sofort die passende Evakuierungsstrategie ausgewählt wird, welche dynamisch an die reale Situation, welche über Sensoren abgebildet ist, angepasst werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie sie in den folgenden Ansprüchen definiert ist.

## Patentansprüche

1. Verfahren zum Ermitteln einer Evakuierungsstrategie (715) für eine Evakuierung eines Gebäudes, umfassend die folgenden Schritte:
Empfangen (201, 301) von Trainingssignalen, welche
Trainingsdaten zum Trainieren eines künstlichen neuronalen
Netzes (501, 701) repräsentieren, wobei die Trainingsdaten Topologiedaten, welche eine Topologie eines Gebäudes angeben, und Ereignisdaten umfassen, welche ein eine Evakuierung des Gebäudes erforderndes Ereignis angeben,
Simulieren (203, 303) eines zeitlichen Verlaufs des Ereignisses basierend auf der Topologie des Gebäudes,
Simulieren eines zeitlichen Verhaltens von Personen innerhalb des Gebäudes,
Ermitteln (205, 307) einer Sollevakuierungsstrategie (711) für eine Evakuierung des Gebäudes basierend auf der Simulation des zeitlichen Verlaufs des Ereignisses sowie auf der Simulation des zeitlichen Verhaltens der Personen,
Trainieren (207, 309) des künstlichen neuronalen Netzes (501, 701) basierend auf den Trainingsdaten derart, dass das künstliche neuronale Netz (501, 701) basierend auf den Trainingsdaten eine Evakuierungsstrategie (715) für eine Evakuierung des Gebäudes ermittelt, welche der ermittelten Sollevakuierungsstrategie (711) entspricht oder welche maximal um ein vorbestimmtes Toleranzmaß von der ermittelten Sollevakuierungsstrategie (711) abweicht,
Empfangen (101) von Sensorsignalen, welche ein mittels eines vom Gebäude umfassten Sensors erfasstes, eine Evakuierung des Gebäudes erforderndes Ereignis repräsentieren,
Ermitteln (103) einer Evakuierungsstrategie (715) für eine Evakuierung aus dem Gebäude mittels des trainierten künstlichen neuronalen Netzes (501, 701) basierend auf dem erfassten Ereignis, und
Ausgeben (105) von Evakuierungsstrategiesignalen, welche die ermittelte Evakuierungsstrategie (715) repräsentieren.

2. Verfahren nach Anspruch 1, wobei die Trainingsdaten Wetterdaten umfassen, welche ein Wetter in einer Umgebung des Gebäudes definieren, wobei der zeitliche Verlauf des Ereignisses basierend auf dem Wetter in der Umgebung des Gebäudes simuliert wird.

3. Verfahren nach einem der vorhergehenden Ansprüche, wobei die Trainingsdaten Personenbelegungsdaten umfassen, welche eine Personenbelegung des Gebäudes angeben, wobei die Sollevakuierungsstrategie (711) basierend auf der Personenbelegung des Gebäudes ermittelt wird.

4. Verfahren nach einem der vorhergehenden Ansprüche, wobei die Trainingsdaten Positionsdaten umfassen, welche eine Position einer Person in dem Gebäude angeben, wobei die Sollevakuierungsstrategie (711) basierend auf der Position der Person in dem Gebäude ermittelt wird.

5. Verfahren nach Anspruch 4, wobei die Positionsdaten jeweils eine Position von den der Personenbelegung entsprechenden Personen angeben, wobei basierend auf dem simulierten Verlauf des Ereignisses das zeitliche Verhalten der Personen simuliert (305) wird.

6. Verfahren nach einem der vorhergehenden Ansprüche, wobei die Trainingsdaten Maschinenzustandsdaten umfassen, welche einen Zustand einer vom Gebäude umfassten Maschine angeben, wobei die Sollevakuierungsstrategie (711) basierend auf dem Zustand der Maschine ermittelt wird.

7. Vorrichtung, die eingerichtet ist, alle Schritte des Verfahrens nach einem der vorherigen Ansprüche auszuführen.

8. Computerprogramm (603), umfassend Befehle, die bei Ausführung des Computerprogramms (603) durch einen Computer diesen veranlassen, ein Verfahren gemäß einem der Ansprüche 1 bis 5 auszuführen.

9. Maschinenlesbares Speichermedium (601), auf dem das Computerprogramm (603) nach Anspruch 8 gespeichert ist.

## Claims

1. Method for determining an evacuation strategy (715) for an evacuation of a building, comprising the following steps:
receiving (201, 301) training signals representing training data for training an artificial neural network (501, 701), wherein the training data comprise topology data indicating a topology of a building and event data indicating an event requiring an evacuation of the building,
simulating (203, 303) a temporal progression of the event on the basis of the topology of the building,
simulating a temporal behaviour of persons within the building, determining (205, 307) a target evacuation strategy (711) for an evacuation of the building on the basis of the simulation of the temporal progression of the event and also the simulation of the temporal behaviour of the persons,
training (207, 309) the artificial neural network (501, 701) on the basis of the training data in such a way that the artificial neural network (501, 701), on the basis of the training data, determines an evacuation strategy (715) for an evacuation of the building which corresponds to the determined target evacuation strategy (711) or which deviates from the determined target evacuation strategy (711) maximally by a predetermined tolerance measure,
receiving (101) sensor signals representing an event requiring an evacuation of the building, said event being detected by means of a sensor that the building comprises,
determining (103) an evacuation strategy (715) for an evacuation from the building by means of the trained artificial neural network (501, 701) on the basis of the detected event, and
outputting (105) evacuation strategy signals representing the determined evacuation strategy (715).

2. Method according to Claim 1, wherein the training data comprise weather data defining weather in surroundings of the building, wherein the temporal progression of the event is simulated on the basis of the weather in the surroundings of the building.

3. Method according to either of the preceding claims, wherein the training data comprise person occupancy data indicating person occupancy of the building, wherein the target evacuation strategy (711) is determined on the basis of the person occupancy of the building.

4. Method according to either of the preceding claims, wherein the training data comprise position data indicating a position of a person in the building, wherein the target evacuation strategy (711) is determined on the basis of the position of the person in the building.

5. Method according to Claim 4, wherein the position data each indicate a position of the persons corresponding to the person occupancy, wherein the temporal behaviour of the persons is simulated (305) on the basis of the simulated progression of the event.

6. Method according to either of the preceding claims, wherein the training data comprise machine state data indicating a state of a machine that the building comprises, wherein the target evacuation strategy (711) is determined on the basis of the state of the machine.

7. Device configured to carry out all the steps of the method according to any of the preceding claims.

8. Computer program (603), comprising instructions which, when the computer program (603) is executed by a computer, cause the latter to carry out a method according to any of Claims 1 to 5.

9. Machine-readable storage medium (601) on which the computer program (603) according to Claim 8 is stored.

## Revendications

1. Procédé de détermination d'une stratégie d'évacuation (715) pour une évacuation d'un bâtiment, comportant les étapes suivantes :
réception (201, 301) de signaux d'entraînement, lesquels représentent des données d'entraînement pour l'entraînement d'un réseau neuronal artificiel (501, 701), dans lequel les données d'entraînement comportent des données de topologie, lesquelles indiquent une topologie d'un bâtiment, et des données d'événement, lesquelles indiquent un événement nécessitant une évacuation du bâtiment,
simulation (203, 303) d'une évolution temporelle de l'événement sur la base de la topologie du bâtiment,
simulation d'un comportement temporel de personnes à l'intérieur du bâtiment,
détermination (205, 307) d'une stratégie d'évacuation théorique (711) pour une évacuation du bâtiment sur la base de la simulation de l'évolution temporelle de l'événement ainsi que de la simulation du comportement temporel des personnes,
entraînement (207, 309) du réseau neuronal artificiel (501, 701) sur la base des données d'entraînement, de telle sorte que le réseau neuronal artificiel (501, 701) détermine sur la base des données d'entraînement une stratégie d'évacuation (715) pour une évacuation du bâtiment qui corresponde à la stratégie d'évacuation théorique (711) déterminée ou qui dévie au maximum d'une marge de tolérance prédéterminée de la stratégie d'évacuation théorique (711) déterminée,
réception (101) de signaux de capteur, lesquels représentent un événement nécessitant une évacuation du bâtiment, détecté au moyen d'un capteur compris dans le bâtiment, détermination (103) d'une stratégie d'évacuation (715) pour une évacuation du bâtiment au moyen du réseau neuronal artificiel (501, 701) entraîné sur la base de l'événement détecté, et
émission (105) de signaux de stratégie d'évacuation, lesquels représentent la stratégie d'évacuation (715) déterminée.

2. Procédé selon la revendication 1, dans lequel les données d'entraînement comportent des données météorologiques, lesquelles définissent des conditions météorologiques dans un environnement du bâtiment, dans lequel l'évolution temporelle de l'événement est simulée sur la base des conditions météorologiques dans l'environnement du bâtiment.

3. Procédé selon l'une des revendications précédentes, dans lequel les données d'entraînement comportent des données d'occupation par des personnes, lesquelles indiquent une occupation du bâtiment par des personnes, dans lequel la stratégie d'évacuation théorique (711) est déterminée sur la base de l'occupation du bâtiment par des personnes.

4. Procédé selon l'une des revendications précédentes, dans lequel les données d'entraînement comportent des données de position, lesquelles indiquent une position d'une personne dans le bâtiment, dans lequel la stratégie d'évacuation théorique (711) est déterminée sur la base de la position de la personne dans le bâtiment.

5. Procédé selon la revendication 4, dans lequel les données de position indiquent respectivement une position des personnes correspondant à l'occupation par des personnes, dans lequel le comportement temporel des personnes est simulé (305) sur la base de l'évolution simulée de l'événement.

6. Procédé selon l'une des revendications précédentes, dans lequel les données d'entraînement comportent des données d'état de machine, lesquelles indiquent un état d'une machine comprise dans le bâtiment, dans lequel la stratégie d'évacuation théorique (711) est déterminée sur la base de l'état de la machine.

7. Dispositif qui est conçu pour exécuter toutes les étapes du procédé selon l'une des revendications précédentes.

8. Programme informatique (603), comportant des instructions qui, lors de l'exécution du programme informatique (603) par un ordinateur, amènent celui-ci à exécuter un procédé selon l'une des revendications 1 à 5.

9. Support de stockage lisible par machine (601), sur lequel est stocké le programme informatique (603) selon la revendication 8.
